(19) Europäisches Patentamt / European Patent Office / Office européen des brevets

(11) **EP 3 505 405 A1**

(12) **EUROPEAN PATENT APPLICATION**
published in accordance with Art. 153(4) EPC

(43) Date of publication:
**03.07.2019 Bulletin 2019/27**

(51) Int Cl.:
**B60S 1/02** (2006.01)   **B60J 1/20** (2006.01)
**H05B 3/20** (2006.01)   **H05B 3/86** (2006.01)

(21) Application number: **17843650.7**

(22) Date of filing: **23.08.2017**

(86) International application number:
**PCT/JP2017/030170**

(87) International publication number:
**WO 2018/038172 (01.03.2018 Gazette 2018/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.08.2016 JP 2016164202**

(71) Applicant: **Nippon Sheet Glass Company, Limited
Tokyo 108-6321 (JP)**

(72) Inventors:
• **CHIBA, Kazuki**
**Tokyo 108-6321 (JP)**
• **OGAWA, Ryohei**
**Tokyo 108-6321 (JP)**
• **OGAWA, Hisashi**
**Tokyo 108-6321 (JP)**

(74) Representative: **Mewburn Ellis LLP
City Tower
40 Basinghall Street
London EC2V 5DE (GB)**

(54)   **SIDE GLASS**

(57)   The present invention provides a side glass panel to be used in a vehicle. The side glass panel includes: a rectangular first glass plate having an upper side, a lower side, a front lateral side, and a rear lateral side; a first busbar extending along a first side that is any one of the upper side, the lower side, the front lateral side, and the rear lateral side; a second busbar extending along a second side that is any one of the upper side, the lower side, the front lateral side, and the rear lateral side; and a plurality of heating wires that are arranged adjacently to each other and connect the first busbar and the second busbar. A blocking portion is configured to conceal the first busbar and the second busbar from the outside or inside of the vehicle.

Fig. 1

EP 3 505 405 A1

## Description

Technical Field

The present invention relates to a side glass panel.

Background Art

On a cold day, or in cold climate areas, a windshield of an automobile sometimes fogs up, which constitutes an obstacle to driving the automobile. Therefore, various methods for removing fogginess of a windshield have been proposed. For example, Patent Literature 1 discloses arranging busbars and heating wires inside a windshield and removing fogginess by generating heat.

Citation List

Patent Literature

Patent Literature 1: JP 2000-77173A

Summary of Invention

Technical Problem

Fogging trouble as mentioned above may occur in not only a windshield but also a side glass panel. However, a side glass panel is smaller than a windshield and thus the arrangement of the heating wires poses a problem. For example, the power consumption W of the heating wire can be determined in accordance with Equation (1) below:

$$W = V^2 R = (S/\rho L) V^2 \qquad (1)$$

where V represents the voltage, R represents the resistance of the heating wire, S represents the cross-sectional area of the heating wire, L represents the length of the heating wire, and $\rho$ represents the thermal conductivity.

Here, the higher the voltage V is, the more advantageous it is for a vehicle. For example, when the outputs of a motor and a generator are the same, the electric current can be reduced by increasing the driving voltage, and the power consumption can be thus reduced. When the electric current is reduced, the diameter of a harness for supplying power can be reduced, and therefore, the weight of the vehicle decreases correspondingly, thus making it possible to increase gas mileage. As described above, increasing the voltage V has various advantages, but the glass will break if excessive heat is generated, and therefore, it is preferable that the power consumption is as low as possible. Therefore, the heating wires need to have a long length L and should be arranged in series, but the heating wires are thin and are thus likely to break. Accordingly, in consideration of this, it is preferable to arrange the heating wires adjacent to each other. However, if the heating wires are arranged adjacent to each other, it is necessary to use sufficiently long busbars to which all the heating wires can be connected, but if such busbars are arranged, the busbars will be visible from the outside or inside of the vehicle, resulting in poor appearance.

The present invention was made in order to solve the aforementioned problems, and it is an object thereof to provide a side glass panel that can prevent two busbars provided therein from being visible from the inside or outside of a vehicle even when a plurality of heating wires are arranged adjacent to each other so as to connect these busbars.

Solution to Problem

A side glass panel according to the present invention includes the following aspects.

Aspect 1 is a side glass panel to be used in a vehicle, the side glass panel including:

a rectangular first glass plate having an upper side, a lower side, a front lateral side, and a rear lateral side;
a first busbar extending along a first side that is any one of the upper side, the lower side, the front lateral side, and the rear lateral side;
a second busbar extending along a second side that is any one of the upper side, the lower side, the front lateral side, and the rear lateral side; and
a plurality of heating wires that are arranged adjacently to each other and connect the first busbar and the second busbar,
wherein a blocking portion is configured to conceal the first busbar and the second busbar from an outside or inside of the vehicle.

It should be noted that the first side and the second side may be different sides or the same side selected from the upper side, lower side, front lateral side, and rear lateral side of the first glass plate.

Aspect 2 is the side glass panel according to aspect 1, wherein the blocking portion is constituted by a blocking film layered at at least one position on an outer surface or inner surface of the first glass plate.

Aspect 3 is the side glass panel according to aspect 1 or 2, wherein the blocking portion is constituted by a door frame to which the side glass panel is to be attached.

Aspect 4 is the side glass panel according to any one of aspects 1 to 3,
wherein the first side is the upper side of the first glass plate, and
the second side is the lower side of the first glass plate.

Aspect 5 is the side glass panel according to any one of aspects 1 to 3,
wherein the first side is the lower side of the first glass plate, and
the second side is the front lateral side or the rear lateral side of the first glass plate.

Aspect 6 is the side glass panel according to aspect 5, wherein the second side is the front lateral side of the first glass plate.

Aspect 7 is the side glass panel according to any one of aspects 1 to 3, wherein the first side and the second side are the lower side of the first glass plate, and the first busbar and the second busbar are arranged adjacent to each other on one line along the lower side of the first glass plate.

Aspect 8 is the side glass panel according to any one of aspects 1 to 3,
wherein the first side is the front lateral side of the first glass plate, and
the second side is the rear lateral side of the first glass.

Aspect 9 is the side glass panel according to aspect 4, further including at least one relay busbar that is arranged at a position different from the positions of the first busbar and the second busbar, and is located along any side of the first glass plate,
wherein the plurality of heating wires connect the first busbar and the second busbar via the at least one relay busbar.

Aspect 10 is the side glass panel according to any one of aspects 5 to 7,
wherein the busbars are arranged such that first end portions of the busbars are close to each other and second end portions of the busbars are away from each other, and
thicknesses of the plurality of heating wires increase from the first end portion side toward the second end portion side.

Aspect 11 is the side glass panel according to any one of aspects 5 to 7,
wherein at least one auxiliary heating wire is further arranged between at least one pair of the heating wires that are adjacent, and
one end portion of the auxiliary heating wire is connected to an intermediate portion of one of the heating wires that are adjacent, and the other end portion of the auxiliary heating wire is connected to the first busbar or the second busbar.

Aspect 12 is the side glass panel according to aspect 8, wherein an attachment angle is within $\pm 30°$ with respect to a vertical direction.

Aspect 13 is the side glass panel according to any one of aspects 1 to 12, further including: a second glass plate that is arranged opposite to the first glass plate and has substantially the same shape as the first glass plate; and an interlayer that is arranged between the first glass plate and the second glass plate,
wherein the first busbar, the second busbar, and the plurality of heating wires are arranged between the first glass plat and the second glass plate.

Aspect 14 is the side glass panel according to aspect 13, wherein the blocking portion is constituted by a blocking film layered at at least one position on an outer surface of the first glass plate, an inner surface of the first glass plate, an outer surface of the second glass plate, and an inner surface of the second glass plate.

Aspect 15 is the side glass panel according to any one of aspects 1 to 14, wherein the first busbar, the second busbar, and the plurality of heating wires are integrally formed of the same material.

Aspect 16 is the side glass panel according to any one of aspects 1 to 15, wherein the heating wires have a thickness of 500 $\mu$m or less.

Advantageous Effects of the Invention

With the present invention, it is possible to prevent the entire region of laminated glass having a trapezoidal shape with a longer lower side from fogging up.

Brief Description of Drawings

FIG. 1 is a front view of a first embodiment of a side glass panel according to the present invention.
FIG. 2 is a cross-sectional view taken along line A-A in FIG. 1.
FIG. 3 is a front view of a second embodiment of the side glass panel according to the present invention.
FIG. 4 is a front view of a third embodiment of the side glass panel according to the present invention.
FIG. 5 is a front view of a fourth embodiment of the side glass panel according to the present invention.
FIG. 6 is a front view of a fifth embodiment of the side glass panel according to the present invention.
FIG. 7 is a front view of a sixth embodiment of the side glass panel according to the present invention.
FIG. 8 is a front view showing another example of the side glass panel according to the present invention.
FIG. 9 is a front view showing yet another example of the side glass panel according to the present invention.
FIG. 10 is a front view showing yet another example of the side glass panel according to the present invention.
FIG. 11 is a diagram showing the attachment angle of a side glass panel.

Description of Embodiments

A. First embodiment

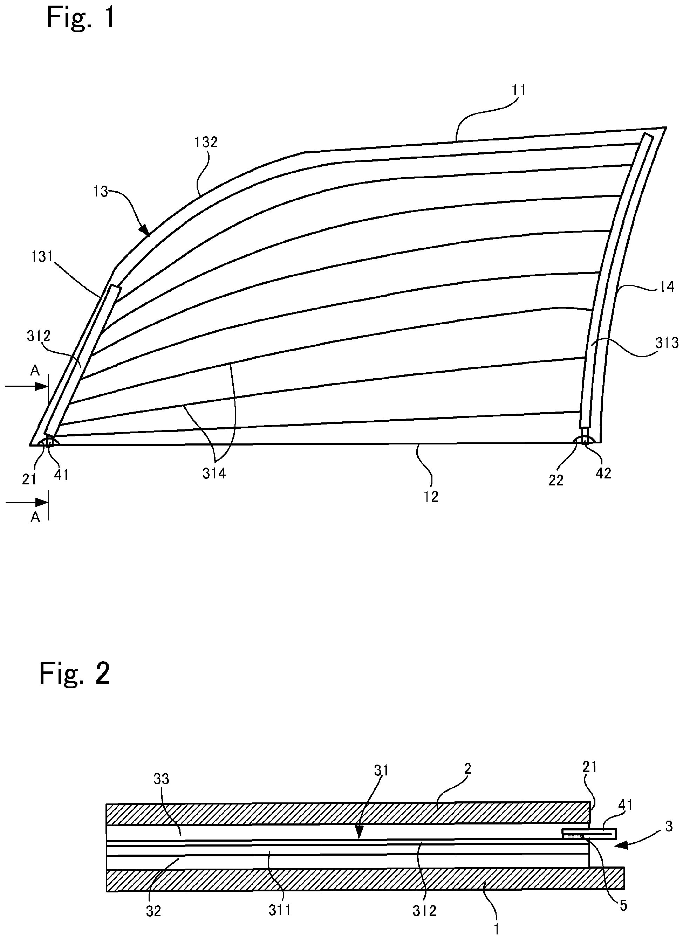

Hereinafter, a first embodiment of a side glass panel for a vehicle according to the present invention will be described with reference to the drawings. FIG. 1 is a plan view of a side glass panel of this embodiment, and FIG. 2 is a cross-sectional view of FIG. 1. As shown in FIGS. 1 and 2, the side glass panel according to this embodiment includes an outer glass plate (first glass plate) 1, an inner glass plate (second glass plate) 2, and an interlayer 3 arranged between the glass plates 1 and 2. Cutout portions 21 and 22 are formed at the lower end portions of the inner glass plate 2, and connection members 41 and 42 extending from the interlayer 3 are exposed from the cutout portions 21 and 22, respectively. It should be noted that, unless otherwise stated, the configuration and effects shown in the first embodiment are shared with all of the subsequent embodiments. The individual members will be described below.

1. Overview of side glass panel

1-1. Glass plate

The glass plates 1 and 2 are formed in a rectangular shape having an upper side 11, a lower side 12, a front lateral side 13, and a rear lateral side 14. It should be noted that the glass plates 1 and 2 have the same shape, and therefore, in the following description, identical reference numerals 11 to 14 are used to denote the identical sides of the glass plates 1 and 2. Here, "rectangular shape" means a shape in which the upper side 11, the lower side 12, the front lateral side 13, and the rear lateral side 14 can be identified in outline, and is not necessarily a rectangle.

The upper side 11 and the lower side 12 extend parallel to each other, and the upper side 11 is shorter than the lower side 12. The front lateral side 13 includes a first portion 131 that extends upward from the front end of the lower side 12 and inclines rearward, and a second portion 132 that extends from the upper end of the first portion 131 and inclines further rearward. The rear lateral side 14 extends upward from the rear end of the lower side 12, substantially parallel to the first portion 131 of the front lateral side 13 and inclines rearward while being slightly curved. Therefore, the rear end of the upper side 11 is located slightly toward the rear with respect to the rear end of the lower side 12. As described above, the arc-shaped cutout portions 21 and 22 are respectively formed in the front end portion and the rear end portion of the lower side of the inner glass plate 2. In the description below, the cutout portion formed in the front end portion of the inner glass plate 2 is referred to as "first cutout portion 21", and the cutout portion formed in the rear end portion is referred to as "second cutout portion 22".

The side glass panel including the above-mentioned outer glass plate 1 and inner glass plate 2 is to be attached to a vehicle door. The side glass panel is supported by a raising/lowering module (regulator) (not shown) provided inside the door, and is thereby raised and lowered. When the side glass panel is raised and the window is thus closed, the lower side 12 of the side glass panel is located below a belt molding B of the door. Therefore, irrespective of whether the window is open or closed, the lower side 12 of the side glass panel is invisible from the outside and inside of the vehicle. During a process of raising the side glass panel, the first portion 131 of the front lateral side 13 and the rear lateral side 14 are supported by guides (e.g., sash portions) of a door frame and moved up/down along the guides. Therefore, the first portion 131 of the front lateral side 13 and the rear lateral side 14 are accommodated in the guides and are thus invisible from the outside and inside of the vehicle. When the window is closed, the second portion 132 of the front lateral side 13 and the upper side 11 are accommodated inside the door frame and are thus also invisible from the outside and inside of the vehicle. It should be noted that the door frame that conceals the sides 11 to 14 of the side glass panel from the outside and inside of the vehicle corresponds to the blocking portion of the present invention.

Known glass plates can be used as the glass plates 11 and 12, and these glass plates can also be made of heat-ray absorbing glass, regular clear glass or green glass, or UV green glass. However, the glass plates 11 and 12 need to attain a visible light transmittance that conforms to the safety standards of a country in which the automobile is to be used. For example, an adjustment can be made so that the outer glass plate 11 ensures a required solar absorptance and the inner glass plate 12 provides a visible light transmittance that meets the safety standards. An example of the composition of clear glass, an example of the composition of heat-ray absorbing glass, and an example of the composition of soda-lime based glass are shown below.

Clear glass

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R is an alkali metal)
Total iron oxide (T-$Fe_2O_3$) in terms of $Fe_2O_3$: 0.08 to 0.14 mass%

Heat-ray absorbing glass

With regard to the composition of heat-ray absorbing glass, a composition obtained based on the composition of clear glass by setting the ratio of the total iron oxide (T-$Fe_2O_3$) in terms of $Fe_2O_3$ to 0.4 to 1.3 mass%, the ratio of $CeO_2$ to 0 to 2 mass%, and the ratio of $TiO_2$ to 0 to 0.5 mass% and reducing the components (mainly $SiO_2$ and $Al_2O_3$) forming the framework of glass by an amount corresponding to the increases in T-$Fe_2O_3$, $CeO_2$, and $TiO_2$ can be used, for example.

Soda-lime based glass

$SiO_2$: 65 to 80 mass%
$Al_2O_3$: 0 to 5 mass%
CaO: 5 to 15 mass%
MgO: 2 mass% or more
NaO: 10 to 18 mass%
$K_2O$: 0 to 5 mass%
MgO + CaO: 5 to 15 mass%
$Na_2O$ + $K_2O$: 10 to 20 mass%
$SO_3$: 0.05 to 0.3 mass%
$B_2O_3$: 0 to 5 mass%
Total iron oxide (T-$Fe_2O_3$) in terms of $Fe_2O_3$: 0.02 to 0.03 mass%

Although there is no particular limitation on the thickness of the laminated glass according to this embodiment, the total thickness of the outer glass plate 1 and the inner glass plate 2 is preferably set to 2.4 to 4.6mm, more preferably 2.6 to 3.4 mm, and even more preferably 2.7 to 3.2 mm, from the viewpoint of weight reduction. As described above, there is a need to reduce the total thickness of the outer glass plate 1 and the inner glass plate 2 in order to reduce the weight. Therefore, although there is no particular limitation on the thicknesses of the glass plates, the thicknesses of the outer glass plate 11 and the inner glass plate 12 can be determined as described below, for example.

The outer glass plate 1 is mainly required to have durability and impact resistance against external interference. For example, when this laminated glass is used as a windshield of an automobile, the impact-resistance performance with respect to flying objects such as small stones is required. On the other hand, a larger thickness is not preferable because the weight increases. From this viewpoint, the thickness of the outer glass plate 1 is preferably 1.0 to 3.0 mm, and more preferably 1.6 to 2.3 mm. The thickness to be used can be determined in accordance with the application of the glass plate.

Although the thickness of the inner glass plate 2 can be made equal to that of the outer glass plate 1, the thickness of the inner glass plate 2 can be made smaller than that of the outer glass plate 11 in order to reduce the weight of the laminated glass, for example. Specifically, when the strength of the glass plate is taken into consideration, the thickness is preferably 0.6 to 2.0 mm, more preferably 0.8 to 1.8 mm, and even more preferably 1.0 to 1.6 mm. Furthermore, the thickness is preferably 0.8 to 1.3 mm. With regard to the inner glass plate 2 as well, the thickness to be used can be determined in accordance with the application of the glass plate.

1-2. Interlayer

Next, the interlayer 3 will be described. The interlayer 3 includes three layers, namely a heat generating layer 31 and two bonding layers 32 and 33 between which the heat generating layer 31 is sandwiched. In the description below, the bonding layer that is arranged on the outer glass plate 1 side is referred to as "first bonding layer 32", and the bonding layer that is arranged on the inner glass plate 2 side is referred to as "second bonding layer 33".

1-2-1. Heat generating layer

First, the heat generating layer 31 will be described. The heat generating layer 31 includes a sheet-like substrate 311, and a first busbar 312, a second busbar 313, and a plurality of heating wires 314 that are arranged on the substrate 311. The substrate 311 can be formed so as to correspond to the above-mentioned glass plates 1 and 2, but the shape of the substrate 311 is not necessarily the same as that of the glass plates 1 and 2 and may be smaller than that of the glass plates 1 and 2. For example, as shown in FIG. 1, the vertical length of the substrate 311 can be made shorter than the vertical length of the glass plates 1 and 2 in order to prevent the substrate 311 from interfering with the cutout portions 21 and 22 of the inner glass plate 2. Also, the horizontal length of the substrate 311 can be made shorter than the width of the glass plates 1 and 2.

The busbars 312 and 313 are formed in a belt shape. The first busbar 312 is formed to extend along the first portions 131 of the front lateral sides 13 of the glass plates 1 and 2 on the substrate 311. On the other hand, the second busbar 313 is formed to extend along the rear lateral sides 14 of the glass plates 1 and 2 on the substrate 311. It should be noted that the lower end portions of the busbars 312 and 313 are respectively arranged above the above-described cutout portions 21 and 22 so as not to be exposed from the cutout portions 21 and 22 when the interlayer 3 is sandwiched between the glass plates 1 and 2. The widths in the front-rear direction of the busbars 312 and 313 are preferably 1 to 50 mm, and more preferably 10 to 30 mm, for example. The reason for this is that busbars 312 and 313 with a width of less than 5 mm may be hotter than the heating wires due to a heat-spot phenomenon, whereas busbars 312 and 313 with a width of more than 50 mm may protrude from the guide of the door frame and be visible from the outside and inside of the vehicle.

The plurality of heating wires 314 are formed to extend in the front-rear direction so as to connect the busbars 312 and 313. Thus, the plurality of heating wires 314 extend adjacently to each other, but not all the heating wires 314 are arranged parallel to each other. For example, the heating wire arranged at the lowest position extends along the lower sides 12 so as to connect the lower end portion of the first busbar 312 and the lower end portion of the second busbar 313, and the heating wire 314 arranged at the highest position extends from the upper end portion of the first busbar 312 to the upper end portion of the second busbar 313 along the second portions 132 of the front lateral sides 13 and the upper sides 11. That is, the vertical length of the first busbar 312 is shorter than the vertical length of the second busbar 313, and therefore, the plurality of heating wires 314 extend rearward while the distances between the adjacent heating wires 314 substantially increase. However, the plurality of heating wires 314 have substantially the same length.

In order to make it difficult to see the heating wires 314, the thickness thereof is preferably 3 to 500 $\mu$m, more preferably 5 to 20 $\mu$m, and even more preferably 8 to 10 $\mu$m. The distances between the adjacent heating wires 314 are preferably 1 to 4 mm, more preferably 1.25 to 3 mm, and even more preferably 1.25 to 2.5 mm.

It should be noted that the heating wires 314 can be formed in not only a linear shape but also various shapes such as a wave shape. In particular, forming the heating wires 314 in a substantially sinusoidal shape makes it possible to not only make the heat distribution uniform but also prevent the heating wires 314 from optically interrupting the visual field through a windshield. It should be noted that the "substantially sinusoidal shape" does not necessarily have a constant amplitude and a constant wavelength unlike a sinusoidal wave and refers to a wave form with random amplitudes and wavelengths.

The width of the heating wires 314 can be measured using a microscope such as VHX-200 (manufactured by Keyence Corporation) at a 1000-fold magnification. It should be noted that it is the cross-sectional areas of the heating wires 314 that practically exert an influence on the generated heat amount, but the width and the cross-sectional area have substantially the same technical meaning. The smaller the widths are, the more difficult the heating wires 314 are to see, and therefore, heating wires 314 having a smaller width are suitable for the windshield according to this embodiment.

Next, the materials of the heat generating layer 31 will be described. The substrate 311 is a transparent film for supporting the busbars 312 and 313 and the heating wires 314, and there is no particular limitation on the material thereof. Examples thereof include polyethylene terephthalate, polyethylene, polymethyl methacrylate, polyvinyl chloride, polyester, polyolefin, polycarbonate, polystyrene, polypropylene, and nylon. The busbars 312 and 313 and the heating wires 314 can be made of the same material, and examples thereof include various materials such as copper (or tinned copper), tungsten, and silver.

Subsequently, a method of forming the busbars 312 and 313 and the heating wires 314 will be described. The busbars 312 and 313 and the heating wires 314 can be formed by arranging, on the substrate 311, thin lines (e.g., wires) and the like that were formed in advance. However, in particular, in order to further reduce the thickness of the heating wires 314, the heating wires 314 can be formed through patterning on the substrate 311. There is no particular limitation on such a method, and various methods such as printing, etching, and transfer can be used. At this time, the busbars 312 and 313 and the heating wires 314 can be formed individually or integrally. It should be noted that the term "integrally" means that no boundaries are formed between materials (i.e., "seamlessly"), and no interfaces are present.

The following configuration can also be employed. That is, the busbars 312 and 313 are formed on the substrate 311, and portions of the substrate 311 that correspond to the busbars 312 and 313 are detached and removed so that a portion of the substrate 311 for the heating wires 314 is left. Thereafter, the heating wires are arranged on the portion of the substrate between the busbars 312 and 313.

In particular, when etching is employed, the procedures are as follows, for example. First, a metal foil is laminated on the substrate 311 via a primer layer through dry laminating. An example of the metal foil is a copper foil. The busbars 312 and 313 and the plurality of heating wires 314 can be patterned on the substrate 311 by performing chemical etching treatment using a photo lithography method on the metal foil. In particular, when the thicknesses of the heating wires 314 are reduced (e.g., 15 $\mu$m or less), it is preferable to use a thin metal foil. Patterning may also be performed through photo lithography on a thin metal layer (e.g., 5 $\mu$m or less) formed on the substrate 311 through deposition, spattering, or the like.

1-2-2. Bonding layer

The bonding layers 32 and 33 are sheet-like members for sandwiching the heat generating layer 31 therebetween and bonding the heat generating layer 31 to the glass plates 1 and 2. The bonding layers 32 and 33 have the same size as the glass plates 1 and 2, and cutout portions having the same shape as the cutout portions 21 and 22 of the inner glass plate 2 are respectively formed in the bonding layers 32 and 32 at positions corresponding to the cutout portions 21 and 22. The bonding layers 32 and 33 can be made of various materials, and examples thereof include a polyvinyl butyral resin (PVB) and ethylene vinyl acetate (EVA). In particular, a polyvinyl butyral resin has excellent adhesiveness with the glass plates and excellent penetration resistance, and is thus preferable. It should be noted that surfactant layers may also be provided between the bonding layers and the heat generating layer. The surfaces of the layers can be reformed using such a surfactant, thus making it possible to improve the adhesive strength.

1-2-3. Thickness of interlayer

The total thickness of the interlayer 3 is not particularly specified, but is preferably 0.3 to 6.0 mm, more preferably 0.5 to 4.0 mm, and even more preferably 0.6 to 2.0 mm. Also, the thickness of the substrate 311 of the heat generating layer 31 is preferably 0.01 to 2.0 mm, and more preferably 0.03 to 0.6 mm. On the other hand, it is preferable that the thickness of the bonding layers 32 and 33 is larger than the thickness of the heat generating layer 31. Specifically, the thickness of the bonding layers 32 and 33 is preferably 0.1 to 2.0 mm, and more preferably 0.1 to 1.0 mm. It should be noted that the second bonding layer 33 is brought into close contact with the substrate 311, and therefore, the thicknesses of the busbars 312 and 313 and the heating wires 314 sandwiched between the second bonding layer 33 and the substrate 311 are preferably 3 to 20 $\mu$m.

The thicknesses of the heat generating layer 31 and the bonding layers 32 and 33 can be measured as described below, for example. First, the cross section of the laminated glass is magnified by a factor of 175 and displayed using a microscope (e.g., VH-5500 manufactured by Keyence Corporation). Then, the thicknesses of the heat generating layer 31 and the bonding layers 32 and 33 are visually identified and measured. At this time, in order to eliminate variations seen in visual identification, the measurement is performed five times, and average values are taken as the thicknesses of the heat generating layer 31 and the bonding layers 32 and 33.

1-3. Connection member

Next, the connection members will be described. The connection members 41 and 42 are used to connect the busbars 312 and 313 to connection terminals (positive electrode terminal and negative electrode terminal; not shown).

The connection members 41 and 42 are made of a conductive material and have a sheet-like shape. In the description below, the connection member connected to the first busbar 312 is referred to as "first connection member 41", and the connection member connected to the second busbar 313 is referred to as "second connection member 42". The connection members 41 and 42 have the same configuration, and therefore, the first connection member 41 will be mainly described hereinafter.

The first connection member 41 is formed in a rectangular shape, and is sandwiched between the first busbar 312 and the second bonding layer 33. The first connection member 41 is fixed to the first busbar 312 using a fixing material 5 such as solder. It is preferable to use solder having a low melting point (e.g., 150°C) as the fixing material 5 such that the first connection member 41 can be simultaneously fixed using an autoclave during assembly of a side glass panel, which will be described later. The first connection member 41 extends from the first busbar 312 to the upper edge of the outer glass plate 1, and is exposed from the first cutout portion 21 formed in the inner glass plate 2. A connection terminal to which a cable extending toward a power source is connected is connected to this exposed portion using a fixing material such as solder. As described above, the connection member 41 and 42 do not protrude from the end portions of the glass plates 1 and 2, and connection terminals are fixed to the portions thereof exposed from the cutout portions 21 and 22 of the inner glass plate 2. It should be noted that the connection members 41 and 42 are formed of a thin material, thus making it possible to bend the connection members 41 and 42 and then fix the end portions thereof to the busbar 312 using the fixing material 5 as shown in FIG. 2.

2. Method for manufacturing side glass panel

Next, a method for manufacturing the side glass panel will be described. First, a manufacturing line for a glass plate will be described.

The outer glass plate 11 and the inner glass plate 12 are formed using a known method, and then the interlayer 3 is sandwiched between the outer glass plate 11 and the inner glass plate 12. Specifically, first, the outer glass plate 1, the first bonding layer 32, the heat generating layer 31, the second bonding layer 33, and the inner glass plate 2 are layered in this order. At this time, the heat generating layer 31 is arranged such that the surface on which the first busbar 312 and the like are formed faces the second bonding layer 33. The lower end portion of the heat generating layer 31 is arranged above the cutout portions 21 and 22 of the inner glass plate 2. Furthermore, the cutout portions of the first and second bonding layers 32 and 33 are matched to the cutout portions 21 and 22 of the inner glass plate 2. Accordingly, the outer glass plate 1 is exposed from the cutout portions 21 and 22 of the inner glass plate 2. Subsequently, the connection members 41 and 42 are inserted between the heat generating layer 31 and the second bonding layer 33 through the cutout portions 21 and 22, respectively. At this time, solder having a low melting point, which serves as the fixing material 5, is applied to the connection members 41 and 42 so as to be arranged on the busbars 312 and 313.

A laminate obtained by layering the glass plates 1 and 2, the interlayer 3, and the connection members 41 and 42 in this manner is placed in a rubber bag and preliminarily bonded together at about 70 to 110°C under vacuum suction. Preliminary bonding can be performed using a method other than this method, the following method can also be employed. For example, the above-mentioned laminate is heated at 45 to 65°C in an oven. Subsequently, this laminate is pressed by a roller at 0.45 to 0.55 MPa. Then, this laminate is again heated at 80 to 105°C in an oven and thereafter again pressed by a roller at 0.45 to 0.55 MPa. Thus, preliminary bonding is finished.

Next, permanent bonding is performed. The preliminarily bonded laminate is permanently bonded using an autoclave at a pressure of 8 to 15 atmospheres and at 100 to 150°C, for example. Specifically, permanent bonding can be performed in the conditions of a pressure of 14 atmospheres and at 135°C, for example. The bonding layers 32 and 33 between which the heat generating layer 31 is sandwiched are bonded to the glass plates 1 and 2 through the above-described preliminary bonding and permanent bonding. In addition, the solder on the connection members 41 and 42 is melted, and the connection members 41 and 42 are fixed to the busbars 312 and 313, respectively. The side glass panel according to this embodiment is thus manufactured.

3. Method for using side glass panel

The side glass panel configured as mentioned above is attached to a vehicle body. Furthermore, connection terminals are fixed to the connection members 41 and 42. When an electric current is applied to the connection terminals thereafter, the electric current is applied to the heating wires 314 via the connection members 41 and 42 and the busbars 312 and 313, and heat is thus generated. Fogginess of the side glass panel can be removed due to the generated heat.

4. Features

As described above, with this embodiment, the following effects can be obtained.

(1) With this embodiment, the first busbar 312 and the second busbar 313 are respectively arranged to extend along the front lateral side 13 and the rear lateral side 14 of the side glass panel, and the plurality of heating wires 314 are arranged adjacently to each other so as to connect the busbars 312 and 313. The plurality of heating wires 314 are arranged to extend in the front-rear direction, which is a longitudinal direction, of the side glass panel in this manner, and therefore, it is thus possible to increase the lengths of the heating wires 314. Therefore, the side glass panel can be heated while being prevented from breaking. The first portion 131 of the front lateral side 13 and the rear lateral side 14 of the side glass panel are accommodated in the glass runs of the door frame, thus making it possible to conceal the busbars 312 and 313 from the outside and inside of the vehicle.

(2) The busbars 312 and 313 and the heating wires 314 are made of the same material, and thus have the same coefficient of linear expansion. Accordingly, the following advantages are obtained. If the busbars 312 and 313 and the heating wires 314 are made of different materials, their coefficients of linear expansion will be different. Therefore, if these members are separately produced and fixed, for example, an issue may arise in that the heating wires separate from the busbars due to a harsh environmental change such as a heat cycle test, and the two glass plates included in the laminated glass thus separate from each other. However, if the busbars 312 and 313 and the heating wires 314 are made of the same material as in this embodiment, such an issue can be prevented.

(3) The busbars 312 and 313 and the heating wires 314 are formed integrally, thus making it possible to prevent contact failure therebetween and thus prevent defective heat generation. The following is a detailed description of defective heat generation. In general, when a glass plate is heated for defogging, it is required to control the electric current value such that the maximum value of heating temperature is 70 to 80°C, for example, in order to prevent cracks in the glass plate. Accordingly, if heat is locally generated due to above-mentioned contact resistance, the electric current value will need to be controlled taking the temperature at such a portion as the maximum value of heating temperature. As a result, an issue will arise in that control that enables heat to be sufficiently generated overall by the heating wires cannot be performed. However, with the above-mentioned configuration, local heat generation can be prevented, thus making it also possible to perform control that enables heat to be sufficiently generated overall by the heating wires.

(4) The heat generating layer 31 in which the busbars 312 and 313 and the heating wires 314 are arranged is sandwiched between the bonding layers 32 and 33, and the thus obtained laminate is arranged between the glass plates 1 and 2. Therefore, the heat generating layer 31 can be reliably fixed to the glass plates 1 and 2. Moreover, covering the busbars 312 and 313 and the heating wires 314 with the second bonding layer 33 makes it possible to prevent these members from coming into contact with the glass plate. As a result, it is possible to prevent the breakage of the glass plate and the like.

B. Second embodiment

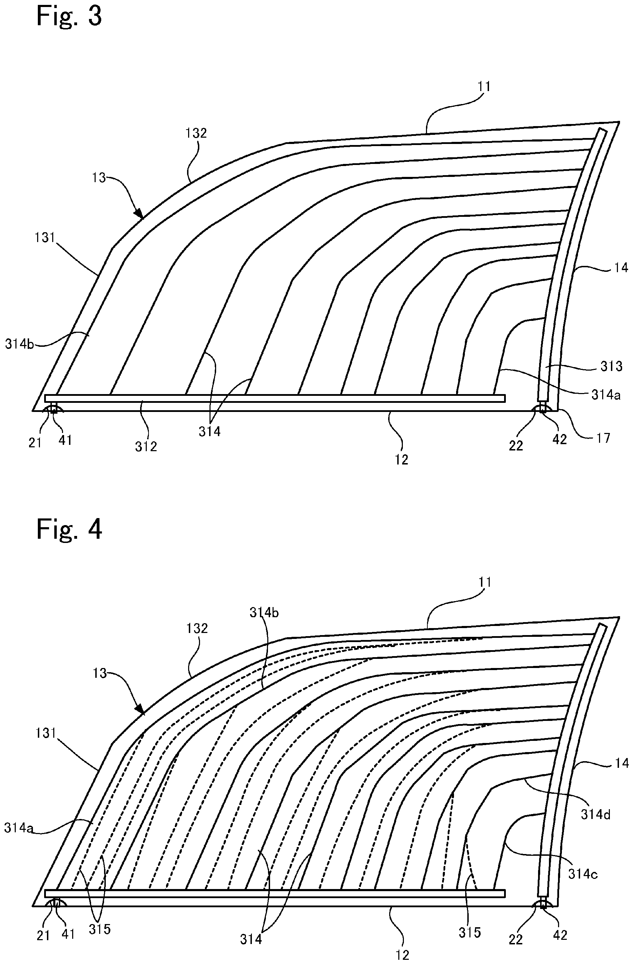

Next, a second embodiment according to the present invention will be described with reference to FIG. 3. FIG. 3 is a plan view of a side glass panel according to the second embodiment. The second embodiment differs from the first embodiment in the arrangement of the busbars and the heating wires. Therefore, only different portions will be described below, identical constituent elements are denoted by identical reference numerals, and descriptions thereof are omitted.

As shown in FIG. 3, with the side glass panel according to this embodiment, the first busbar 312 is arranged along the lower sides 12 of the glass plates 1 and 2, and the second busbar 313 is arranged along the rear lateral sides 14. The plurality of heating wires 314 connecting the two busbars 312 and 313 are arranged adjacently to each other, and are formed in an arc shape. That is, the plurality of heating wires 314 are formed substantially concentrically about a corner portion 17 at which the lower side 12 and the rear lateral side 14 of the side glass panel intersect. Accordingly, for example, a heating wire 314a that connects the vicinity of the rear end portion (first end portion) of the first busbar 312 and the vicinity of the lower end portion (first end portion) of the second busbar 313 is short, and a heating wire 314b that connects the vicinity of the front end portion (second end portion) of the first busbar 312 and the vicinity of the upper end portion (second end portion) of the second busbar 313 is long because it extends along the second portion 132 of the front lateral side 13 and the upper side 11. The longer the heating wire 314 is, the thicker it is.

The first connection member 41 is connected to the front end portion of the first busbar 312, and the second connection member 42 is connected to the lower end portion of the second busbar 313. Accordingly, the positions at which the connection members 41 and 42 are connected are the same as those in the first embodiment.

As described above, with this embodiment, the following effects can be obtained. First, the first busbar 312 is arranged along the lower side 12 of the side glass panel and is thus arranged below the belt molding B. Therefore, the first busbar 312 is invisible from the outside and inside of the vehicle. On the other hand, the second busbar 313 is accommodated in the glass run and is thus invisible from the outside and inside of the vehicle.

The plurality of heating wires 314 have different lengths. However, the longer the heating wire 314 is, the thicker it is, and therefore, the heating wires 314 can generate substantially the same amount of heat. That is, when the heating wires 314 have the same width, the amount of heat generated by a longer heating wire 314 is smaller than that generated by a shorter heating wire 314. To compensate for a decrease in a generated heat amount, the width of the longer heating wire 314 is increased. Accordingly, a uniform amount of generated heat can be supplied to the entire side glass panel, and as a result, fogginess can be removed from the entire side glass panel.

C. Third embodiment

Next, a third embodiment according to the present invention will be described with reference to FIG. 4. FIG. 4 is a plan view of a side glass panel according to the third embodiment. The third embodiment differs from the second embodiment in the heating wires. Therefore, only different portions will be described below, identical constituent elements are denoted by identical reference numerals, and descriptions thereof are omitted.

As shown in FIG. 4, with the side glass panel according to this embodiment, the arrangement of the heating wires 314 is substantially the same as that of the second embodiment, but all the heating wires have the same width. At least one auxiliary heating wire 315 is connected to some of the plurality of heating wires 314. Thus, the longer the heating wire 314 is, the thicker it is.

For example, three auxiliary heating wires 315 pass between the uppermost heating wire 314a that connects the vicinity of the front end portion of the first busbar 312 and the vicinity of the upper end portion of the second busbar 313, and the adjacent heating wire 314b, and are connected to the heating wire 314a. One end of each auxiliary heating wire 315 is connected to the uppermost heating wire 314a, and the other end is connected to the first busbar 312. On the other hand, a smaller number of auxiliary heating wires 315 are connected to a shorter heating wire 314, or a shorter auxiliary heating wire 315 is connected thereto. For example, no auxiliary heating wires 315 are connected to the shortest heating wire 314c, but a short auxiliary heating wire 315 is connected to a slightly longer heating wire 314d adjacent to the heating wire 314c. As described above, when all the heating wires 314 have the same width, at least one auxiliary heating wire 315 is connected to a longer heating wire 314, or an auxiliary heating wire 315 having a different length is connected thereto, in order to compensate for a decrease in a generated heat amount.

As described above, with this embodiment, fogginess can be uniformly removed over the entire side glass panel as with the second embodiment. It should be noted that when a plurality of auxiliary heating wires 315 are provided, the auxiliary heating wires 315 may or may not intersect. The arrangement of the auxiliary heating wires 315 can be determined as appropriate from the viewpoint of supplying a uniform amount of generated heat, thus making it possible to determine the number and the lengths thereof as appropriate. One end of each auxiliary heating wire 315 can also be connected to the second busbar 313. The distance between the heating wires 314 can also be adjusted instead of providing the auxiliary heating wires 315. For example, in a region in which longer heating wires 314 are arranged, the distance between the heating wires 314 can be reduced to increase the amount of heat applied to the glass.

D. Fourth embodiment

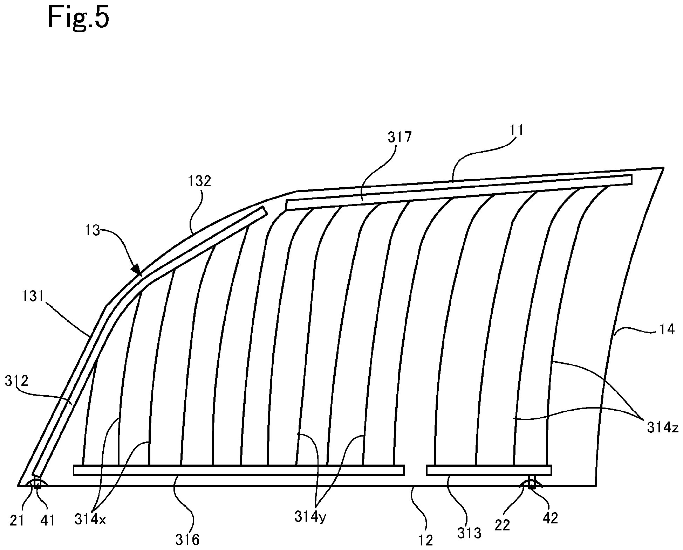

Next, a fourth embodiment according to the present invention will be described with reference to FIG. 5. FIG. 5 is a plan view of a side glass panel according to the fourth embodiment. The fourth embodiment differs from the first embodiment in the arrangement of the busbars and the heating wires. Therefore, only different portions will be described below, identical constituent elements are denoted by identical reference numerals, and descriptions thereof are omitted.

As shown in FIG. 5, with the side glass panel according to this embodiment, the first busbar 312 is arranged along the front lateral side 13 of the side glass panel. The second busbar 313 is formed to have a shorter length, and is arranged along the vicinity of the rear end portion of the lower side 12. In addition, a first relay busbar 316 that extends along the lower side 12 is arranged between the front end of the lower side 12 of the side glass panel and the second busbar 313, and a second relay busbar 317 is further arranged along the upper side 11 of the side glass panel. The first relay busbar 316 is formed to have a length corresponding to the first busbar 312 and the approximate front half of the second relay busbar 317.

The plurality of heating wires 314 are divided into three groups . That is, the plurality of heating wires 314 are divided into a first group 314x including the heating wires 314 connecting the first busbar 312 and the first relay busbar 316, a second group 314y including the heating wires 314 connecting the first relay busbar 316 and the second relay busbar 317, and a third group 314z including the heating wires 314 connecting the second relay busbar 317 and the second busbar 313. The heating wires 314 in the first group 314x extend, substantially parallel to each other, downward from the first busbar 312, and are connected to the front half of the first relay busbar 316. The heating wires 314 in the second group 314y extend, substantially parallel to each other, upward from the rear half of the first relay busbar 316, and are connected to the front half of the second relay busbar 316. The heating wires 314 in the third group 314z extend, substantially parallel to each other, downward from the rear half of the second relay busbar 317, and are connected to the second busbar 313.

As described above, with this embodiment, a configuration is employed in which the two relay busbars 316 and 317 are provided between the first busbar 312 and the second busbar 313, and the plurality of heating wires 314x, 314y, and 314z connect the first busbar 312 and the second busbar 313 via the relay busbars 316 and 317. Accordingly, the heating wires 314 between the first busbar 312 and the second busbar 313 can be made longer. This makes it possible to make the heating wires 314 longer when the heating wires 314 are arranged to extend in the vertical direction in a small side glass panel.

E. Fifth embodiment

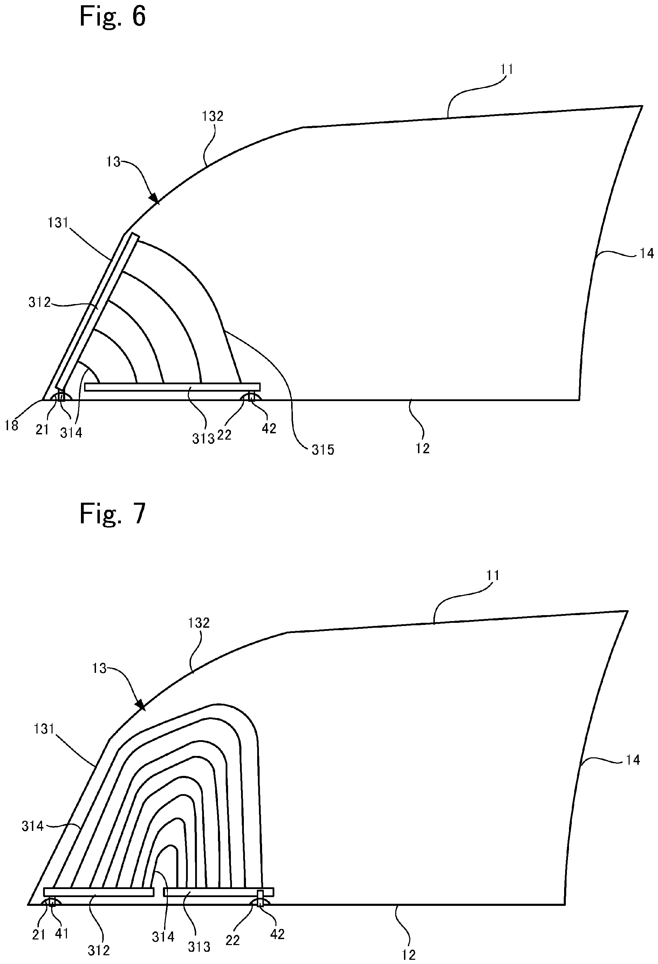

Next, a fifth embodiment according to the present invention will be described with reference to FIG. 6. FIG. 6 is a plan view of a side glass panel according to the fifth embodiment. The fifth embodiment is substantially the same as the second embodiment, but the arrangement of the heating wires and the busbars is different. Only different portions will be described below, identical constituent elements are denoted by identical reference numerals, and the descriptions thereof are omitted.

As shown in FIG. 6, with the side glass panel according to this embodiment, the first busbar 312 is arranged along the first portions 131 of the front lateral sides 13 of the glass plates 1 and 2, and the second busbar 313 is arranged along the substantially front half of the lower sides 12. The plurality of heating wires 314 connecting the two busbars 312 and 313 are arranged adjacently to each other, and are formed in an arc shape. That is, the plurality of heating wires 314 are formed substantially concentrically about a corner portion 18 at which the front lateral side 13 and the lower side 12 of the side glass panel intersect. Accordingly, for example, a heating wire 314 that connects the vicinity of the lower end portion (first end portion) of the first busbar 312 and the vicinity of the front end portion (first end portion) of the second busbar 313 is short, and a heating wire 314 that connects the vicinity of the upper end portion (second end portion) of the first busbar 312 and the vicinity of the rear end portion (second end portion) of the second busbar 313 is long. The longer the heating wire 314 is, the thicker it is.

The first connection member 41 is connected to the front end portion of the first busbar 312, and the second connection member 42 is connected to the lower end portion of the second busbar 313. Accordingly, the second cutout portion 22 is formed at a position corresponding to the position of the second connection member 42.

As described above, with this embodiment, the heating wires 314 are arranged near the corner portion 18 located at the lower end of the front portion of the side glass panel. That is, this portion is located at a position corresponding to a side mirror. Accordingly, with the fifth embodiment, particularly the position corresponding to a side mirror is heated and is thus prevented from fogging up, and therefore, the side mirror can be clearly seen from the inside of the vehicle. Since the entire side glass panel is not heated in this manner, the power consumption can be reduced. It should be noted that the widths of longer heating wires 314 are increased in the same manner as in the second embodiment, fogginess of the entirety of a region in which the heating wires 314 are arranged can be uniformly removed. However, the heating wires can be made to have the same width 314. In this case, it is sufficient that the auxiliary heating wires 315 are provided in the same manner as in the third embodiment.

F. Sixth embodiment

Next, a sixth embodiment according to the present invention will be described with reference to FIG. 7. FIG. 7 is a plan view of a side glass panel according to the sixth embodiment. In the sixth embodiment, a configuration for heating a position corresponding to a side mirror is employed as in the fifth embodiment. Only portions different from those of the above-mentioned embodiments will be described below, identical constituent elements are denoted by identical reference numerals, and descriptions thereof are omitted.

As shown in FIG. 7, with the side glass panel according to this embodiment, the first busbar 312 is arranged near the front ends of the lower sides 12 of the glass plates 1 and 2. The second busbar 313 is arranged behind the first busbar 312 and extends along the lower side 12. That is, the busbars 312 and 313 are arranged adjacent to each other on one line along the lower side 12. The busbars 312 and 313 are short, and the total length of the two busbars 312 and 313 is about half of the length of the lower side 12.

The heating wires 314 connecting the busbars 312 and 313 are formed as follows. That is, the plurality of heating wires 314 are formed in an arc shape about the vicinity of the position at which the rear end of the first busbar 312 is located and the position at which the front end of the second busbar 313 is located. For example, a heating wire 314 connecting the vicinity of the rear end portion (first end portion) of the first busbar 312 and the vicinity of the front end portion (first end portion) of the second busbar 313 is short, and is formed in a small arc shape protruding upward. A heating wire 314 connecting the vicinity of the front end portion (second end portion) of the first busbar 312 and the vicinity of the rear end portion (second end portion) of the second busbar 313 is long, and is formed in a large arc shape protruding upward. The uppermost heating wire 314 is configured such that a portion thereof extends along the first portion 131 of the front lateral side 13.

As described above, the plurality of heating wires 314 are formed in a portion located at a position corresponding to a side mirror. Accordingly, with the sixth embodiment, particularly the position corresponding to a side mirror is heated and is thus prevented from fogging up, and therefore, the side mirror can be clearly seen from the inside of the vehicle. Since the entire side glass panel is not heated in this manner, the power consumption can be reduced. It should be noted that the widths of longer heating wires 314 are increased in the same manner as in the second embodiment, fogginess of the entirety of a region in which the heating wires 314 are arranged can be uniformly removed. However, the heating wires can be made to have the same width 314. In this case, it is sufficient that the auxiliary heating wires 315 are provided in the same manner as in the third embodiment.

5. Modified examples

Although the embodiments of the present invention have been described above, the present invention is not limited to the above embodiments, and various modifications can be carried out without departing from the gist of the invention. It should be noted that modified examples below can be implemented in combination as appropriate.

5-1

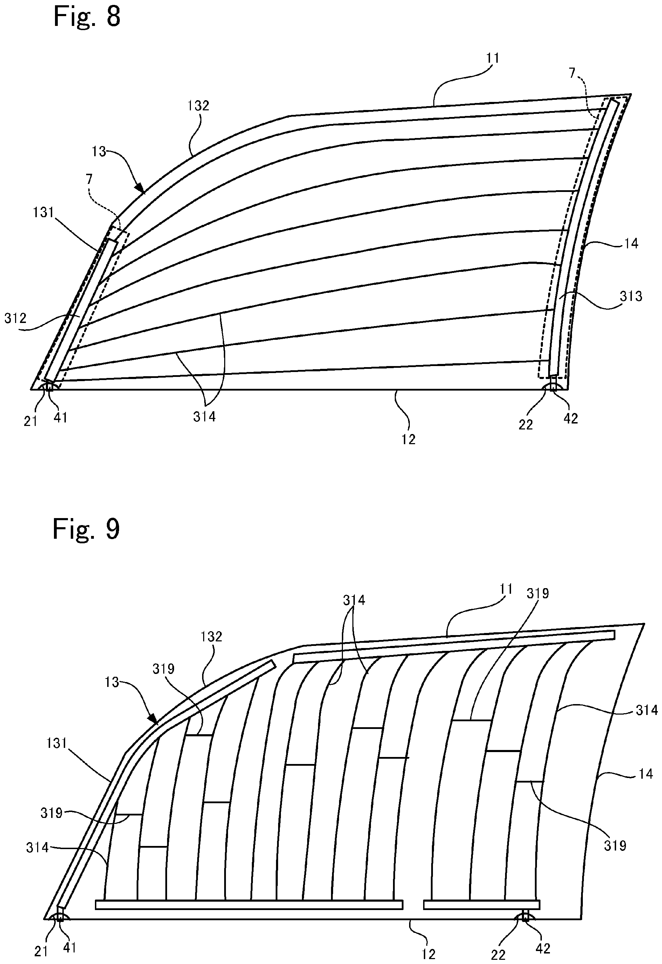

With the above-mentioned embodiments, the busbars 312 and 313 are accommodated in sash portions and thus are invisible from the outside or inside of the vehicle. However, the busbars 312 and 313 protrude from the sash portions depending on their widths in some cases. In such a case, blocking layers can be layered along the sides of the glass plates 1 and 2 along which the busbars 312 and 313 are arranged. FIG. 8 shows an example of the side glass panel of the first embodiment in which blocking layers 7 are formed (it will be appreciated that such a configuration can also be applied to the side glass panels of the other embodiments). The blocking layers 7 can be made of ceramic with a dark color such as black, and can be formed on at least one of the outer surface of the outer glass plate 11, the inner surface of the outer glass plate 11, the outer surface of the inner glass plate 12, and the inner surface of the inner glass plate 12.
The blocking layers 7 can be formed in various ways. For example, the blocking layer may be formed on only the inner surface of the outer glass plate 11 or only the inner surface of the inner glass plate 12, or the blocking layers 7 may be formed on the inner surface of the outer glass plate 11 and the inner surface of the inner glass plate 12. The blocking layers 7 can be made of ceramic and various materials, and may have the following composition, for example.

Table 1

|  |  | Ceramic paste |
| --- | --- | --- |
| Pigment *1 | mass% | 10% |
| Resin (cellulose resin) | mass% | 5% |
| Organic solvent (pine oil) | mass% | 15% |
| Glass binder *2 | mass% | 70% |
| Viscosity | dPs | 150 |
| *1, Main components: copper oxide, chromium oxide, iron oxide, and manganese oxide<br>*2, Main components: bismuth borosilicate, zinc borosilicate | | |

Although the ceramic can be formed using a screen printing process, it can also be produced, in addition, by transferring a transfer film for firing to the glass plate and firing it. The screen printing can be performed under the conditions that a polyester screen of 355 mesh is used, the coating thickness is 20 $\mu$m, the tension is 20 Nm, the squeegee hardness is 80 degrees, the attachment angle is 75°, and the printing speed is 300 mm/s, for example, and then drying is performed in a drying furnace at 150°C for 10 minutes. The ceramic can thus be formed.
The blocking layers 7 can also be formed by bonding blocking films made of a dark-colored resin instead of layering ceramic.

5-2

With the above-mentioned embodiments, the interlayer 3 includes three layers in total, namely the heat generating layer 31 and the two bonding layers 32 and 33, but there is no limitation thereto. That is, it is sufficient that the interlayer 3 includes at least the busbars 312 and 313 and the heating wires 314. Therefore, for example, a configuration can be employed in which only one bonding layer is included, or the heat generating layer 31 is sandwiched between the glass plates 1 and 2 using an adhesive or the like. In addition, a configuration can also be employed in which the heat generating layer 31 does not include the substrate 311.

5-3

The heat generating layer 31 can be shaped into various shapes. For example, a sheet-like heat generating layer 31 that is prepared in advance by forming the busbar 312 and 313 and the heating wires 314 on the substrate 311 can be cut into a suitable shape as appropriate and arranged between the glass plates 1 and 2. Accordingly, when the edges of the glass plates 1 and 2 are curved, for example, the edge of the substrate 311 may be curved correspondingly. It is not necessary that the heat generating layer 31 and the glass plates 1 and 2 have exactly the same shape, and the heat generating layer 31 can be arranged at only a portion in which an antifog effect is desired.

Therefore, the heat generating layer 31 can be shaped into various shapes and may be smaller than the glass plates 1 and 2. It should be noted that the glass plates 1 and 2 can also be shaped into various shapes in addition to a perfect rectangle.

With the above-mentioned embodiments, the busbars 312 and 313 and the heating wires 314 are arranged on the substrate 311, but it is sufficient that at least the heating wires 314 are arranged. Accordingly, the busbars 312 and 313 can also be arranged between the bonding layers 32 and 33.

5-4

The adjacent heating wires 314 can be connected using at least one bypass wire. In this case, for example, even when one heating wire 314 breaks, an electric current can be applied through the adjacent heating wire 314. Such bypass wires can be provided in various ways, and FIG. 9 shows an example (it will be appreciated that such a configuration can also be applied to the side glass panels of the other embodiments). That is, at least one bypass wire 319 is provided between the adjacent heating wires 314, and the heating wires 314 can be thereby connected. There is no particular limitation on the positions and number of the bypass wires 319. There is also no particular limitation on the shape of the bypass wires 319, and the bypass wire 319 may be arranged to obliquely extend as shown in FIG. 9, or may be shaped into various shapes such as a wave shape. It should be noted that the bypass wires 319 can be made of the same material as that of the heating wires 314 in one piece with the heating wires 314.

5-5

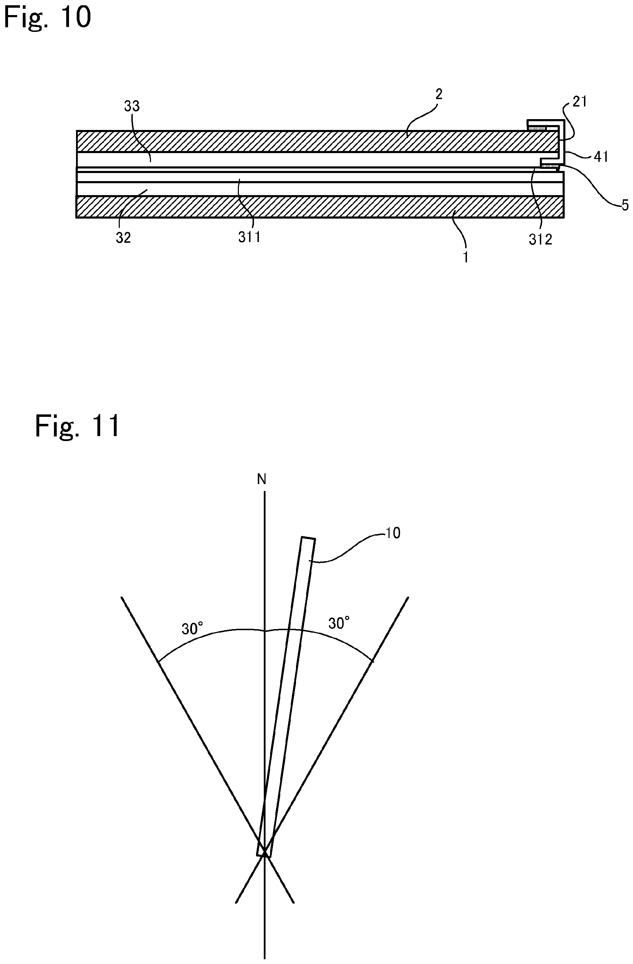

There is no limitation on the shape of the connection members 41 and 42 and the configuration of the cutout portions 21 and 22 of the inner glass plate 2. For example, as shown in FIG. 10, a configuration can also be employed in which small cutout portions 21 and 22 having a size that is substantially equal to the thickness of the connection members 41 and 42 are formed in the inner glass plate 2, and the connection members 41 and 42 extending from the busbars 312 and 313 are folded back at the cutout portions 21 and 22 and bonded to the surface of the inner glass plate 2. This makes it possible to prevent the connection members 41 and 42 from protruding from the end portions of the laminated glass in the surface direction.

5-6

Each side glass panel described in the above-mentioned embodiments can be attached to a vehicle at various angles. For example, as shown in FIG. 11, a side glass panel 10 can be attached at an angle within $\pm30°$, and preferably $\pm15°$, with respect to a vertical direction N. Although a windshield is arranged inclining significantly, the side glass panel 10 rises at an angle closer to a right angle compared with the windshield. Therefore, when the heating wires 314 are arranged to extend in the front-rear direction (horizontal direction) as in the first embodiment, for example, the heating wires 314 are not dense as viewed in the horizontal direction, thus making it possible to prevent obstruction of view. On the other hand, even in a case where the distances between the heating wires 314 are the same, when the side glass panel 10 inclines significantly in the same manner as the windshield, the heating wires 314 are dense as viewed in the horizontal direction, which may cause obstruction of view.

5-7

There is no particular limitation on the shape of the glass plates 1 and 2. It is sufficient that the glass plates 1 and 2 have a shape in which the upper side 11, the lower side 12, the front lateral side 13, and the rear lateral side 14 can be identified in outline, and the glass plates 1 and 2 do not necessarily have a rectangular shape. Accordingly, as the front lateral side 13 in the above-mentioned embodiments, each of the sides 11 to 14 may be constituted by a side with two or more angles. The sides 11 to 14 may be linear or curved.

5-8

With the above-mentioned embodiments, the heat generating layer is provided in the interlayer, but instead, the busbars 312 and 313 and the heating wire 314 can be formed on the inner surface of the outer glass plate 1 or the inner surface of the inner glass plate 2 through screen printing or the like. In this case, the heat generating layer 31 can be constituted by only the substrate 311 or at least one bonding layer. The busbars 312 and 313 and the heating wires 314 can be arranged as described in the above-mentioned embodiments.

5-9

With the above-mentioned embodiments, the side glass panel is constituted by a laminated glass including the outer glass plate 1, the inner glass plate 2, and the interlayer 3, but can also be constituted by a single glass plate. In this case, the busbars 312 and 313 and the heating wires 314 can be formed on the inner surface of the glass plate through screen printing or the like. The busbars and the heating wires can be arranged as described in the above-mentioned embodiments.

List of Reference Numerals

| 1   | Outer glass plate    |
| 2   | Inner glass plate    |
| 3   | Interlayer           |
| 31  | Heat generating layer|
| 311 | Substrate            |
| 312 | First busbar         |
| 313 | Second busbar        |
| 314 | Heating wire         |

**Claims**

1.  A side glass panel to be used in a vehicle, comprising:

    a rectangular first glass plate having an upper side, a lower side, a front lateral side, and a rear lateral side;
    a first busbar extending along a first side that is any one of the upper side, the lower side, the front lateral side, and the rear lateral side;
    a second busbar extending along a second side that is any one of the upper side, the lower side, the front lateral side, and the rear lateral side; and
    a plurality of heating wires that are arranged adjacently to each other and connect the first busbar and the second busbar,
    wherein a blocking portion is configured to conceal the first busbar and the second busbar from an outside or inside of the vehicle.

2.  The side glass panel according to claim 1,
    wherein the blocking portion is constituted by a blocking film layered at at least one position on an outer surface or inner surface of the first glass plate.

3.  The side glass panel according to claim 1 or 2,
    wherein the blocking portion is constituted by a door frame to which the side glass panel is to be attached.

4.  The side glass panel according to any one of claims 1 to 3,
    wherein the first side is the upper side of the first glass plate, and
    the second side is the lower side of the first glass plate.

5.  The side glass panel according to any one of claims 1 to 3,

wherein the first side is the lower side of the first glass plate, and
the second side is the front lateral side or the rear lateral side of the first glass plate.

**6.** The side glass panel according to claim 5,
wherein the second side is the front lateral side of the first glass plate.

**7.** The side glass panel according to any one of claims 1 to 3,
wherein the first side and the second side are the lower side of the first glass plate, and the first busbar and the second busbar are arranged adjacent to each other on one line along the lower side of the first glass plate.

**8.** The side glass panel according to any one of claims 1 to 3,
wherein the first side is the front lateral side of the first glass plate, and
the second side is the rear lateral side of the first glass.

**9.** The side glass panel according to claim 4, further comprising at least one relay busbar that is arranged at a position different from the positions of the first busbar and the second busbar, and is located along any side of the first glass plate,
wherein the plurality of heating wires connect the first busbar and the second busbar via the at least one relay busbar.

**10.** The side glass panel according to any one of claims 5 to 7,
wherein the busbars are arranged such that first end portions of the busbars are close to each other and second end portions of the busbars are away from each other, and
thicknesses of the plurality of heating wires increase from the first end portion side toward the second end portion side.

**11.** The side glass panel according to any one of claims 5 to 7,
wherein at least one auxiliary heating wire is further arranged between at least one pair of the heating wires that are adjacent, and
one end portion of the auxiliary heating wire is connected to an intermediate portion of one of the heating wires that are adjacent, and the other end portion of the auxiliary heating wire is connected to the first busbar or the second busbar.

**12.** The side glass panel according to claim 8,
wherein an attachment angle is within $\pm 30°$ with respect to a vertical direction.

**13.** The side glass panel according to any one of claims 1 to 12, further comprising:

a second glass plate that is arranged opposite to the first glass plate and has substantially the same shape as the first glass plate; and
an interlayer that is arranged between the first glass plate and the second glass plate,
wherein the first busbar, the second busbar, and the plurality of heating wires are arranged between the first glass plat and the second glass plate.

**14.** The side glass panel according to claim 13,
wherein the blocking portion is constituted by a blocking film layered at at least one position on an outer surface of the first glass plate, an inner surface of the first glass plate, an outer surface of the second glass plate, and an inner surface of the second glass plate.

**15.** The side glass panel according to any one of claims 1 to 14,
wherein the first busbar, the second busbar, and the plurality of heating wires are integrally formed of the same material.

**16.** The side glass panel according to any one of claims 1 to 15,
wherein the heating wires have a thickness of 500 $\mu$m or less.

Fig. 1

Fig. 2

## Fig. 3

## Fig. 4

Fig.5

Fig. 6

Fig. 7

## Fig. 8

## Fig. 9

Fig. 10

Fig. 11

**INTERNATIONAL SEARCH REPORT**

| International application No. |
| --- |
| PCT/JP2017/030170 |

A. CLASSIFICATION OF SUBJECT MATTER
*B60S1/02*(2006.01)i, *B60J1/20*(2006.01)i, *H05B3/20*(2006.01)i, *H05B3/86* (2006.01)i

According to International Patent Classification (IPC) or to both national classification and IPC

B. FIELDS SEARCHED

Minimum documentation searched (classification system followed by classification symbols)
B60S1/00-B60S1/60, B60J1/20, H05B3/20, H05B3/86

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2004-528699 A  (Saint-Gobain Glass France),<br>16 September 2004 (16.09.2004),<br>paragraph [0015]<br>& US 2004/0159645 A1<br>paragraph [0015]<br>& WO 2002/098176 A1      & DE 10126869 A1 | 1,3,14,15<br>2,4-13 |
| Y | JP 2013-503424 A  (Pilkington Group Ltd.),<br>31 January 2013 (31.01.2013),<br>paragraph [0044]<br>& US 2012/0152930 A1<br>paragraph [0064]<br>& WO 2011/023974 A2 | 2 |

☒  Further documents are listed in the continuation of Box C.     ☐  See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>07 November 2017 (07.11.17) | Date of mailing of the international search report<br>21 November 2017 (21.11.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2017/030170

C (Continuation). DOCUMENTS CONSIDERED TO BE RELEVANT

| Category* | Citation of document, with indication, where appropriate, of the relevant passages | Relevant to claim No. |
|---|---|---|
| Y | US 2016/0174295 A1 (Saint-Gobain Glass France), 16 June 2016 (16.06.2016), fig. 1 & JP 2016-532624 A & WO 2015/014511 A1 | 4-12 |
| Y | CD-ROM of the specification and drawings annexed to the request of Japanese Utility Model Application No. 89547/1992 (Laid-open No. 47060/1994) (Asahi Glass Co., Ltd.), 28 June 1994 (28.06.1994), fig. 4 (Family: none) | 4-12 |
| Y | JP 11-208421 A (Asahi Glass Co., Ltd.), 03 August 1999 (03.08.1999), fig. 3 (Family: none) | 9 |
| Y | JP 11-339942 A (Asahi Glass Co., Ltd.), 10 December 1999 (10.12.1999), paragraph [0027] (Family: none) | 10,13 |
| Y | WO 2015/132611 A1 (Pilkington Group Ltd.), 11 September 2015 (11.09.2015), paragraph [0044]; fig. 10 & JP 2017-512367 A & US 2017/0079091 A1 | 11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000077173 A